# EUROPÄISCHE PATENTSCHRIFT

(11) **EP 2 989 650 B1**
(45) Veröffentlichungstag und Bekanntmachung des Hinweises auf die Patenterteilung: **15.04.2020**
(21) Anmeldenummer: 14728926.8
(22) Anmeldetag: 04.06.2014
(51) Int. Cl.: H01H 1/02, B22F 3/105, H01H 33/664, B22F 7/08, C22C 1/04

(54) **VERFAHREN UND VORRICHTUNG ZUR HERSTELLUNG VON KONTAKTELEMENTEN FÜR ELEKTRISCHE SCHALTKONTAKTE**
METHOD AND DEVICE FOR PRODUCING CONTACT ELEMENTS FOR ELECTRICAL SWITCHING CONTACTS
PROCÉDÉ ET DISPOSITIF DE FABRICATION D'ÉLÉMENTS DE CONTACTS DE COMMUTATION ÉLECTRIQUE

(30) Priorität: 20.06.2013 DE 102013211659
(43) Veröffentlichungstag der Anmeldung: 02.03.2016
(73) Patentinhaber: Siemens Aktiengesellschaft, 80333 München (DE)
(72) Erfinder: ROSSNER, Wolfgang, 83607 Holzkirchen (DE); POHLE, Dirk, 91301 Forchheim (DE); SCHUH, Carsten, 85598 Baldham (DE); SCHACHTSCHNEIDER, Klaus, 12159 Berlin (DE)
(86) Internationale Anmeldenummer: PCT/EP2014/061605
(87) Internationale Veröffentlichungsnummer: WO 2014/202390

(56) Entgegenhaltungen:
- EP-A2- 0 731 478
- DE-T2- 60 033 331
- JP-A- H0 520 961
- JP-A- H09 237 555
- JP-A- H10 340 654
- JP-A- H11 232 971
- JP-A- 2006 228 454

## Beschreibung

Die Erfindung betrifft Kontaktelemente für elektrische Schaltkontakte für jeden Spannungsbereich. Insbesondere betrifft die Erfindung Kontaktelemente für solche Schaltkontakte, wie sie für Vakuumröhren (Vakuumschaltröhren) verwendet werden. Genauer gesagt betrifft die Erfindung die Herstellung von Kontaktelement-Halbzeugen für elektrische Schaltkontakte, die Herstellung von Kontaktelementen für elektrische Schaltkontakte und die Herstellung von elektrischen Schaltkontakten sowie eine Vorrichtung zur Herstellung dieser Teile.

Elektrische Schaltkontakte in Vakuumröhren müssen verschiedenen Anforderungen genügen. Im geschlossenen Zustand soll Strom geleitet werden, weshalb für die Kontaktelemente der Schaltkontakte ein Kontaktmaterial mit einer sehr hohen elektrischen Leitfähigkeit zum Einsatz kommt. Bei Ein- und Ausschalten treten aufgrund der hohen Kontaktdrücke und Schaltgeschwindigkeiten große mechanische, thermo-mechanische und thermo-physikalische Belastungen, sowie extreme Temperaturbelastungen durch Lichtbögen auf. Darum wird als Kontaktmaterial meist eine Mischung aus zwei oder mehr metallischen oder nichtmetallischen Komponenten verwendet. Die Mischung umfasst mindestens eine sehr gut leitende Komponente und eine Komponente mit hoher mechanischer und thermischer Belastbarkeit. Beispiele hierfür sind CuCr oder WCAg oder WCu, wobei Cu (Kupfer) bzw. Ag (Silber) für die gute elektrische Leitfähigkeit und Cr (Chrom), WC (Wolframcarbid) bzw. W (Wolfram) für die Abbrandfestigkeit und die guten mechanischen Eigenschaften verantwortlich ist.

Verfahren, bei denen ein elektrisches oder elektromagnetisches Feld einen Sinterprozess unterstützt und/oder hervorruft, sind aus dem Stand der Technik bekannt und werden unter dem Begriff FAST (field assisted sintering technologies) zusammengefasst. Es ist bekannt, elektrische Schaltkontakte mit einem FAST-Verfahren herzustellen. Ferner offenbart das Dokument JP H09 237555 A ein Verfahren gemäß dem Oberbegriff von Anspruch 1 und eine Vorrichtung zu Durchführung des Verfahrens.

Es ist eine Aufgabe der vorliegenden Erfindung, die Herstellung von elektrischen Schaltkontakten zu optimieren. Diese Aufgabe wird durch ein Verfahren nach Anspruch 1 bzw. durch eine Vorrichtung nach Anspruch 6 gelöst. Vorteilhafte Ausführungen der Erfindung sind in den Unteransprüchen angegeben.

Die Kernidee der Erfindung ist es, das Kontaktmaterial vor dem Sinterprozess derart bereitzustellen, dass sich die Materialzusammensetzung des Kontaktmaterials und/oder wenigstens eine Eigenschaft des Kontaktmaterials in wenigstens einer Körperrichtung des fertigen Kontaktelements ändert. Mit anderen Worten schlägt die Erfindung mittels FAST hergestellte Kontaktelemente mit sich ändernden Materialeigenschaften vor. Auf diese Art und Weise können die vorteilhaften Eigenschaften der bekannten FAST-Verfahren besonders gut zur Herstellung geeigneter Kontaktelemente angewendet werden. Bevor auf die Kernidee der Erfindung genauer eingegangen wird, werden nachfolgend einige dieser vorteilhaften Eigenschaften näher erläutert.

Für die Herstellung von Schaltkontakten für Vakuumröhren ist das für die Kontaktelemente verwendete Kontaktmaterial von großer Bedeutung, da es bestimmten Anforderungen genügen muss. Es ist bekannt, dass Porosität, Korngrößenverteilungen, Dotierungen und Verunreinigungen, Dichte, Härte und andere Parameter die Schaltleistung des Kontaktmaterials stark beeinflussen. Ein anschauliches Beispiel sind Mikroporen, insbesondere oberflächennahe Poren, die bei einem Aufschmelzen von Kontaktmaterial zu einer Beeinträchtigung des Vakuums, bis hin zu Ausfällen der Vakuumröhre führen können. Ein anderes Problem ist die Löslichkeit von Cr im Cu. Diese Löslichkeit ist zwar nur sehr gering. Allerdings führen bereits geringe Spuren gelösten Cr im Cu zu einer merklichen Reduzierung der elektrischen Leitfähigkeit des Kupfers. Weiterhin spielt die räumliche Verteilung der Komponenten eine Rolle.

Größere Zonen, in denen nur eine Komponente vorliegt, müssen vermieden werden.

Derzeit werden Kontaktelemente, die als Kontaktelemente für Vakuumröhren häufig in Form von Kontaktscheiben benötigt werden, unter Verwendung geeigneter Kontaktmaterialien zumeist mit Hilfe ganz unterschiedlicher Verfahren hergestellt, u. a. durch Heißpressen, Sintern, Sintern und anschließendem Infiltrieren, Gießen und Umformen, oder Lichtbogenumschmelzen. Diese Verfahren sind maschinell sehr aufwändig, dauern lange und/oder führen zu Kontaktelementen mit ungenügender Qualität. Dadurch entsteht zum einen eine hohe Ausschussrate. Zum anderen ist die Prüfung der Qualität der Kontaktelemente u. a. auf Härte, Porosität und Leitfähigkeit wegen der oft schwankenden Materialqualität sehr aufwändig.

Durch die Verwendung eines FAST-Verfahrens ist im Vergleich zu den üblichen Herstellungsverfahren eine sehr viel schnellere und kostengünstigere Herstellung von Kontaktelementen möglich, und zwar sowohl von Halbzeugen, beispielsweise in Form von Scheiben oder Ringen, welche anschließend noch spanend nachbearbeitet werden müssen, als auch von bereits fertig geformten Kontaktelementen (Net-Shape-Verfahren).

Zugleich sind die mittels FAST-Verfahren hergestellten Kontaktelemente auch qualitativ den mittels herkömmlicher Verfahren hergestellten Kontaktelementen überlegen. Insbesondere zeichnen sich diese Kontaktelemente bei angepasster Prozessführung durch folgende Eigenschaften aus: eine nahezu hundertprozentige Dichte und damit minimale Porosität, kleine Korn- bzw. Kristallitgrößen, eine hohe Reinheit, ein Lösen der Komponenten ineinander tritt kaum auf. Die Materialeigenschaften dieser Kontaktelemente sind zudem sehr genau reproduzierbar, so dass Qualitätsschwankungen, wie sie aus dem Stand der Technik bekannt sind, nicht mehr auftreten. Im Ergebnis ist die Ausschussrate sehr viel geringer und die Qualitätsüberprüfung deutlich weniger aufwändig.

Der Einsatz von FAST eignet sich auch deshalb gut für die Herstellung von Kontaktelementen, weil sich durch die Wahl geeigneter Prozessparameter bestimmte Eigenschaften des Kontaktmaterials sehr gezielt beeinflussen und damit an spezielle Anforderungen anpassen lassen. Beispielsweise lässt sich durch den Einsatz geringerer Temperaturen und Drücke eine definierte Porosität erzeugen oder durch eine längere Verweildauer bei Maximaltemperatur eine gezielte Lösung von Komponenten an den Korngrenzen erreichen, welche beim Abkühlen zur Bildung von Ausscheidungsgefügen und/oder einer definierten Gradientenbildung führt.

Werden Halbzeuge hergestellt, die anschließend spanend nachbearbeitet werden, beispielsweise dergestalt, dass in scheibenförmige Rohlinge mit Hilfe einer Fräse Schlitze eingebracht werden, kann bei einem porenfreien Gefüge mit Kühlschmiermitteln für die Fräse gearbeitet werden, ohne dass ein Eindringen des Kühlschmiermittels in das Kontaktelement befürchtet werden muss. Die spanende Bearbeitung kann dann schneller durchgeführt werden und die zur spanenden Bearbeitung verwendeten Werkzeuge nutzen sich weniger ab.

Je nach Anforderung können unterschiedliche FAST-Verfahren bei der Herstellung der Kontaktelemente verwendet werden. Geeignete FAST-Verfahren sind insbesondere Electric Current Assisted/Activated Sintering (ECAS), Spark Plasma Sintering (SPS), Electro Sinter Forging (ESF), Pulsed Electrical Current Sintering (PECS), Current Activated Pressure Assisted Densification (CAPAD), Electric Pulse Assisted Consolidation (EPAC), Plasma Activated Sintering (PAS), Resistant Sintering (RS), Electrical Discharge Compaction (EDC), Dynamic Magnetic Compaction (DMC).

Allen im Rahmen dieser Erfindung unter dem Begriff FAST-Verfahren zusammengefassten Verfahren ist gemeinsam, dass ein elektrisches oder elektromagnetisches Feld den Herstellungsprozess der Halbzeuge, beispielsweise in Gestalt von scheibenförmigen Kontaktelementen, bzw. den Herstellungsprozess der fertigen Kontaktelemente unterstützt. Bei diesem Herstellungsprozess handelt es sich, je nach Art des FAST-Verfahrens z. B. um Sintern, Heiß- oder Kaltpressen, uniaxiales oder isostatisches Pressen. Anders ausgedrückt wird unter einem FAST-Verfahren ein Verfahren verstanden, bei dem ein elektrisches oder elektromagnetisches Feld zur Unterstützung oder zum Hervorrufen eines Sinterprozesses angewendet wird. So wird beispielsweise auch ein entsprechend modifiziertes Heiß- oder Kaltpressverfahren, bei dem durch einen übergelagerten Stromfluss ein Sinterprozess durch die entstehende Joulesche Wärme angestoßen wird, als ein FAST-Verfahren im Sinne der Erfindung verstanden.

Dabei gibt es zur Einstellung des elektrischen oder elektromagnetischen Feldes verschiedene Möglichkeiten, z. B. Stromstärke, Spannung, Spannungsanstieg, Pulsdauer, Zahl der Pulse, Frequenz. Diese Parameter beeinflussen u. a. die Korngröße, Porosität, Festigkeit und Reinheit der Kontaktmaterialien und werden je nach Anforderung, d. h. für jedes Material und jede Anwendung, optimiert.

Andere für die Herstellung relevante Parameter sind die Heiz- und Abkühlraten sowie die Verweildauer bei Maximaltemperatur. Diese können auf einfache Weise je nach Anforderung an das hergestellte Material und je nach verwendetem FAST-Prozess variiert werden. Für die Herstellung der Kontaktelemente wird das eingesetzte FAST-Verfahren vorzugsweise so ausgelegt, dass die Verweildauer des Sinterproduktes bei der maximalen Sintertemperatur möglichst kurz ist. Die Verweildauer beträgt vorzugsweise zwischen weniger als einige Minuten, im industriellen Herstellungsprozess typischerweise weniger als fünf Minuten, bis weniger als einige Sekunden. Damit lassen sich hohe und wirtschaftlich sehr attraktive Produktionsraten verwirklichen. Das eingesetzte FAST-Verfahren ist vorzugsweise zudem so ausgelegt, dass sehr schnelle Heiz- und Abkühlraten realisiert werden. Die Heiz- und Abkühlraten sind vorzugsweise größer als 100 K/min. Durch die kurze Verweildauer und/ oder die großen Heiz- und Abkühlraten lassen sich nachteilige thermodynamische Effekte, wie Phasenbildung, Phasenzersetzung, Phasenreaktionen, Interdiffusion, unterdrücken.

Zudem lassen sich dadurch Stoffzusammensetzungen nutzen, die bei üblichen Herstellverfahren nicht kompatibel sind und sich daher nicht zu einem Werkstück zusammenbringen lassen. Derartige Stoffzusammensetzungen sind nun möglich und bilden ein homogenes, fein verteiltes Mikrogefüge derart, dass an jedem einzelnen Punkt des Kontaktelementes sowohl die Leitfähigkeit als auch die Lichtbogenbeständigkeit gewährleistet ist.

Erfindungsgemäß können Kontaktmaterialien hergestellt werden, die ein Mikrogefüge aufweisen, das allein durch die Spezifizierung der eingesetzten, zumeist in Pulverform vorliegenden Ausgangsmaterialien definiert wird. In einem Ausführungsbeispiel der Erfindung werden zur Herstellung des Kontaktmaterials nanoskalige Pulver oder Zusatzstoffe eingesetzt, unter deren Verwendung Mikrogefüge mit nanoskaligen Phasen oder Korngefügen dargestellt werden können. Dies ist, anders als bei allen herkömmlichen Herstellungsverfahren, möglich, da sich die Pulverstrukturen wegen des sehr schnellen Prozesses nicht oder kaum verändern. Als nanoskalige Phasen werden hier insbesondere Phasen mit Strukturgrößen kleiner als 1 µm verstanden. Derartige nanopartikuläre Strukturen ergeben eine sehr hohe mechanische Stabilität des Kontaktmaterials, können extreme Spannungen durch Superplastizität besser kompensieren und zeigen bei geeigneter Größenverteilung der Phasen und Körner hohe Alterungsstabilität.

Kommen bei dem FAST-Verfahren pulverförmige Ausgangsmaterialien zum Einsatz, die in eine Pressform gegeben werden, so wie dies beispielsweise bei dem bevorzugt verwendeten Spark-Plasma-Sintern (SPS) der Fall ist, können außerdem Zusatzstoffe auf eine sehr homogen verteilte Weise beigemischt werden, wie dies bei herkömmlichen Herstellungsverfahren nicht möglich ist. So können beispielsweise durch die Zugabe von Tellur oder Bismut zu den Cu- und/oder Cr-Ausgangspulvern die Schalteigenschaften des späteren Kontaktelementes verbessert werden.

Darüber hinaus ist, vor allem bei dem Net-Shape-Verfahren, bei der Verwendung von pulverförmigen Ausgangsmaterialien das Herstellungsverfahren gegenüber solchen herkömmlichen Herstellungsverfahren deutlich vereinfacht, bei denen durch Umschmelzen zunächst stets ein Rohkörper, beispielsweise in Gestalt eines Vollzylinders, entsteht, welcher erst in die gewünschte Form gebracht werden muss, beispielsweise durch ein Zersägen des Zylinders zur Erlangung von scheibenförmigen Kontaktelementen.

Auch kann bei der Verwendung von pulverförmigen Ausgangsmaterialien durch geeignete Maßnahmen, beispielsweise eine entsprechende geometrische Ausführung der Pressform, der Anteil an überschüssigem Material gegenüber solchen herkömmlichen Herstellungsverfahren deutlich verringert werden, bei denen erst Rohkörper hergestellt und anschließend durch Wegnahme von Material die gewünschte Endform erreicht wird, beispielsweise indem durch ein Ausfräsen von scheibenförmigen Rohlingen ringförmige Kontaktelemente erlangt werden.

Wird ein Net-Shape-Verfahren verwendet, so dass keine spanende Nachbearbeitung eines Halbzeugs mehr notwendig ist, kann das Kontaktelement eine deutlich geringe Materialstärke aufweisen. Mindestabmessungen, wie sie bei Halbzeugen erforderlich sind, um ein Halten des Halbzeugs zum Zweck der Bearbeitung zu ermöglichen, beispielsweise ein Einklemmen oder Einspannen des Halbzeugs in einer CNC-Fräse, müssen dann nicht mehr vorgehalten werden.

Die Erfindung ist nicht auf bestimmte Kontaktelementformen beschränkt. Insbesondere können verschiedene Kontaktgeometrien verwirklicht werden. Neben einfachen Plattenkontakten können beispielsweise Axialmagnetfeld (AMF)-Kontakte oder Radialmagnetfeld (RMF)-Kontakte, letztere beispielsweise in Gestalt von Spiralkontakten oder geschlitzten Topfkontakten, verwirklicht werden. Diese und andere geeignete Kontaktgeometrien dienen dazu, mit Hilfe einer positiven Beeinflussung des Lichtbogens einerseits Überhitzungen und ein Aufschmelzen der Kontaktoberfläche während der Einschalt- und der Löschphase und andererseits die Bildung von Anodenflecken beim Ausschalten großer Ströme zu vermeiden.

Ebenso ist die Erfindung nicht auf die bereits genannten Materialsysteme CuCr und WCAg beschränkt. Diese sind nur beispielhaft angegeben. Die Erfindung ist auf jede geeignete Materialkombination anwendbar, wobei es sich dabei vorzugsweise um mindestens zwei Komponenten handelt, von denen die eine Komponente hochtemperaturstabil ist oder die Verschweißneigung der Kontakte reduziert, und die andere Komponente sehr gut leitfähig ist.

Die Erfindung ist auch nicht auf bestimmte Anwendungen beschränkt. Sie ist jedoch besonders vorteilhaft einsetzbar bei der Herstellung von Kontaktelementen für Schaltkontakte für Vakuumröhren für jeden Spannungsbereich. Andere Einsatzbereiche von nach dem erfindungsgemäßen Verfahren hergestellten Kontaktelementen sind beispielsweise Schaltkontakte in Schützen, Relais, Tastern oder Schaltern verschiedener Schaltleistung.

Die vorliegende Erfindung schlägt nun vor, das Kontaktelement derart herzustellen, dass sich die Materialzusammensetzung und/oder wenigstens eine Eigenschaft des Kontaktmaterials in wenigstens einer Körperrichtung des Kontaktelements verändert. Die Änderung ist dabei graduell, d. h. in aufeinanderfolgenden Stufen. Eine solche stufenweise Änderung ist in der Erfindung derart feinstufig, dass eine kontinuierliche Änderung vorliegt. Derart gestaltete Kontaktelemente können immer dann besonders einfach hergestellt werden, wenn bei dem FAST-Verfahren pulverförmige Ausgangsmaterialien zum Einsatz kommen.

Wird eine solche graduelle Änderung der Materialzusammensetzung in Dickenrichtung des Kontaktelements vorgenommen, dann ist es beispielsweise möglich, den Anteil einer Komponente des Kontaktmaterials auf definierte Art zu ändern. Der Anteil der Komponente kann dabei erhöht oder verringert werden, um eine gewünschte Änderung der Eigenschaften des Kontaktelements zu erreichen. In einer Ausführungsform der Erfindung kann so der Cr-Anteil in denjenigen Bereichen des CuCr-Kontaktelements, in denen Cr nicht benötigt wird, bis auf Null verringert werden, ohne auf einen hohen Cr-Anteil in denjenigen Bereichen zu verzichten, in denen er für die Funktionalität des Kontaktelements notwendig ist. Da die Chrompartikel in der Regel gröber sind als die Kupferpartikel, steigt die Pulverschüttdichte mit sinkendem Cr-Anteil, was den FAST-Prozess erleichtert und die Produktivität erhöht. Ein erhöhter Cu-Anteil in dem Kontaktelement resultiert in einer höheren elektrischen Leitfähigkeit, was zu geringeren Verlusten und geringerer Erwärmung der Vakuumröhre führt. Wird als unterste, dem Kontaktträger zugewandte Schicht reines Cu-Pulver verwendet, ergibt sich durch die Materialgleichheit eine einfachere und bessere Verbindbarkeit zu einem Cu-Kontaktträger, da durch die Materialgleichheit kostengünstige Löt- oder Schweißverfahren verwendet werden können. Darüber hinaus ergibt sich ein Potenzial zur Kostensenkung, da Cr-Pulver etwa doppelt so teuer ist wie Cu-Pulver. Entsprechendes gilt auch für die anderen Materialkomponenten, beispielsweise den Wolframanteil in WCu und den Wolframkarbidanteil in WCAg.

Mit einer graduellen Änderung der Materialzusammensetzung in radialer Richtung kann die Bewegung des Lichtbogens positiv beeinflusst werden. Insbesondere ist es möglich, den Bereich, in dem der Lichtbogen brennt, zu vergrößern. Dadurch kann die Lebensdauer des Schaltkontakts verlängert werden. Durch die Anwendung des FAST-Verfahrens bei der Herstellung des Kontaktelements ist es möglich, Kontaktelemente mit sehr fein abgestuften Veränderungen der Materialzusammensetzung bzw. der Materialeigenschaften in radialer Richtung herzustellen. Damit kann ein besonders großer Effekt bei der Lichtbogensteuerung erreicht werden. Die Herstellung solcher Kontaktelemente ist dabei auf besonders einfache Weise möglich, ohne dass beispielsweise einzeln hergestellte Kontaktelementabschnitte mit jeweils homogener Materialzusammensetzung aufwändig miteinander verbunden werden müssen.

Die Anwendung eines vergleichsweise schnellen FAST-Verfahrens, typischerweise mit Prozesszeiten unter 30 Minuten, verbunden mit maximalen Prozesstemperaturen unterhalb der Cu-Schmelztemperatur, stellt darüber hinaus sicher, dass sich die gewollten Konzentrationsunterschiede nicht aufgrund von Diffusions- und Lösungsprozessen während des Sintervorgangs ausgleichen. Der Materialgradient in der Pulverschüttung bleibt in dem fertigen Kontaktelement erhalten. FAST-Verfahren sind daher für die Herstellung derartiger Kontaktelemente besonders geeignet, während herkömmliche Verfahren mit Sinterzeiten von typischerweise mehreren Stunden als von vornherein ungeeignet ausscheiden. Ebenso scheiden Herstellungsverfahren aus, bei denen mindestens eine Komponente in die Schmelzphase überführt wird.

Kommen pulverförmige Ausgangsmaterialien zum Einsatz, können neben den Hauptkomponenten auch weitere Zusatzstoffe, wie Tellur oder Bismut, die beispielsweise zur Verbesserung der Schalteigenschaften dienen, auf dieselbe Weise zu dem Kontaktelement hinzugefügt werden. Es kann daher nicht nur ein Chrom- oder Wolframgradient, sondern beispielsweise auch ein Tellur- oder Bismutgradient eingestellt werden. Dies ist bei vielen herkömmlichen Herstellungsverfahren für Kontaktelemente, wie beispielsweise einem Lichtbogenumschmelzen, verfahrensbedingt nicht möglich.

Erfolgt bei der Durchführung des FAST-Prozesses die Herstellung jeweils einzelner Kontaktelemente, kann die Materialzusammensetzung bzw. die Veränderung der Materialzusammensetzung für jedes Kontaktelement individuell erfolgen. Somit können trotz industrieller Massenfertigung auf einfache und kostengünstige Art und Weise individuell an den jeweiligen Anwendungsfall angepasste Kontaktelemente hergestellt werden.

Darüber hinaus kann bei der Herstellung des Kontaktelements, auch bei gleichbleibender Materialzusammensetzung, eine Eigenschaft des Kontaktmaterials in wenigstens einer Körperrichtung des Kontaktelements verändert werden, beispielsweise indem für wenigstens eine der Komponenten des Kontaktmaterials unterschiedliche Korngrößen verwendet werden, so dass sich eine graduelle Änderung der Korngröße dieser Komponente innerhalb des Kontaktelements ergibt. Zusammenfassend ergibt sich durch eine sich innerhalb des Kontaktelements ändernde Materialzusammensetzung und/oder Materialeigenschaft und/oder Gefügeeigenschaft die Möglichkeit, die Eigenschaften des Kontaktelements zu optimieren.

In einem einfachen Ausführungsbeispiel wird anstelle eines homogenen Pulvergemischs eine gradierte Pulverschüttung verwendet. Die Schichtabfolge der Gradientenstruktur kann alternativ auch durch die Stapelung und Lamination von auf Maß geschnittenen Grünfolien dargestellt werden. Diese in ihrer stofflichen Zusammensetzung, z. B. graduelle Variation des Anteils von Cu und Cr, angepassten Grünfolien können z. B. durch Foliengießen hergestellt werden.

Wie nachfolgend erläutert wird, ist es darüber hinaus besonders vorteilhaft, den Sinterprozess auf einem metallischen Substrat durchzuführen und dadurch Kontaktelement-Halbzeuge für elektrische Schaltkontakte, Kontaktelemente für elektrische Schaltkontakte und/oder elektrische Schaltkontakte, insbesondere für Vakuumröhren, herzustellen. Während im Stand der Technik das Sintern immer zu Objekten führt, die vollständig aus gesintertem Material bestehen, ist das metallische Substrat in diesem Fall stets ein integraler Teil des späteren Objektes. Bei dem Substrat handelt es sich entweder um den Kontaktträger des späteren Schaltkontaktes oder aber um einen Abschnitt des späteren Kontaktelements. Eine solche Art und Weise der Herstellung ist besonders einfach mit der Kernidee der vorliegenden Erfindung verknüpfbar und ermöglicht einige besonders vorteilhafte Eigenschaften der Kontaktelemente.

Die oben bereits erwähnten, derzeit bei der Herstellung der Kontaktelemente üblichen Verfahren, beispielsweise Heißpressen, Sintern oder Lichtbogenumschmelzen, sind nicht nur sehr aufwändig, langsam und mit Qualitätsproblemen behaftet. Bei dieser Art der Herstellung sind auch stets mehr oder weniger aufwändige Verbindungsprozesse notwendig, um das Kontaktelement mit einem Kontaktträger zu verbinden, um einen fertigen Schaltkontakt zu erhalten. Üblicherweise werden die bereits fertig hergestellten Kontaktelemente mit Hilfe eines Löt- oder Schweißprozesses an den Kontaktträgern angebracht. Dieses mehrstufige, langsame Vorgehen ist ein Grund, weshalb die Herstellung von Schaltkontakten vergleichsweise teuer ist. Neben erhöhten Prozesskosten sind auch vergleichsweise hohe Lagerkosten zu verzeichnen.

Eine weitere Idee der vorliegenden Erfindung ist es daher, den Sinterprozess auf einem metallischen Substrat durchzuführen und dadurch Kontaktelement-Halbzeuge für elektrische Schaltkontakte, Kontaktelemente für elektrische Schaltkontakte und/oder elektrische Schaltkontakte, insbesondere für Vakuumröhren, herzustellen. Während im Stand der Technik das Sintern immer zu Objekten führt, die vollständig aus gesintertem Material bestehen, ist das metallische Substrat dann stets ein integraler Teil des späteren Objektes. Bei dem Substrat handelt es sich entweder um den Kontaktträger des späteren Schaltkontaktes oder aber um einen Abschnitt des späteren Kontaktelements.

Im ersten Fall wird das FAST-Verfahren dazu verwendet, eine einteilige Kontaktträger-Kontaktelement-Kombination herzustellen (Anspruch 3). Hierzu wird ein Bereich eines vorhandenen Kontaktträgers mittels eines FAST-Verfahrens derart verändert, dass dieser Bereich als Kontaktelement dienen kann. Mit anderen Worten ist die separate Herstellung eines Kontaktelements in einem vorherigen Schritt nicht mehr erforderlich. Stattdessen wird ein bestimmter Teil des Kontaktträgers derart modifiziert, dass er funktional ein Kontaktelement darstellt.

Dies wird vorzugsweise dadurch verwirklicht, dass der Kontaktträger bereits wenigstens eine erste Komponente des Kontaktmaterials aufweist und wenigstens eine zweite Komponente des Kontaktmaterials durch ein FAST-Verfahren in den Kontaktträger auf eine Art und Weise eingebracht wird, dass es sich anschließend in einem bestimmten räumlichen Bereich des Kontaktträgers befindet (Anspruch 4). Beispielsweise wird das Kontaktmaterial in sich erweichendes Trägermaterial gedrückt und es entsteht in einem oberflächennahen, die Oberfläche einschließenden Bereich des Kontaktträgers eine Materialzusammensetzung, die der Materialzusammensetzung von herkömmlich hergestellten Kontaktelementen weitestgehend entspricht.

Durch diese Art der Herstellung wird nicht nur ein Prozessschritt eingespart, so dass nun ein einstufiger, schneller Prozess mit erheblichem Kosteneinsparpotenzial möglich ist. Auch die benötigte Menge einzelner Komponenten des Ausgangsmaterials kann verringert werden, was zu Kosteneinsparungen und/oder der Beseitigung von unerwünschten Nebeneffekten führt.

In einer Ausführungsform der Erfindung besteht der Kontaktträger beispielsweise u. a. aus Kupferbasiswerkstoffen. Zugleich muss das Kontaktelement einen hohen Chromanteil aufweisen, insbesondere auf der der Schaltstrecke zugewandten Oberfläche, dort bis in eine bestimmte Tiefe des Kontaktelements, da Cr die Härte und Abbrandfestigkeit erhöht und gleichzeitig den Abrieb und die Verschweißneigung reduziert. Allerdings wirkt sich Cr nachteilig auf die Leitfähigkeit des Kontaktelements aus. Es führt außerdem zu einer Versprödung des Kontaktmaterials. Zudem ist Chrompulver etwa doppelt so teuer wie Kupferpulver. Mit der vorgeschlagenen Herstellungsweise, bei der Cr in den Cu-Kontaktträger eingebracht wird, kann der Chromanteil in denjenigen Bereichen der Kontaktelement-Trägerelement-Kombination, wo es nicht benötigt wird, verringert werden, bis hin zu einem vollständigen Verzicht auf Chrom in diesen Bereichen. Dadurch wird der Gesamt-Chromanteil in der Kontaktelement-Kontaktträger-Kombination deutlich gesenkt. Zugleich ist in denjenigen Bereichen, wo ein hoher Chromanteil für die Funktionalität des Kontaktelements notwendig ist, keine Reduzierung des Chromanteils vorgesehen.

Entsprechendes gilt auch für Kontaktmaterialien auf Basis WCu, wie sie z. B. Anwendung finden in Hochspannungsschaltern, und für jedes andere Kontaktmaterial, bei dem mindestens eine der Hauptkomponenten gleich dem Kontaktträgermaterial ist. Die beschriebene Art der einstufigen Herstellung einer Kontaktträger-Kontaktelement-Kombination lässt sich analog auf andere Kontaktmaterialien, welche aus mindestens zwei Komponenten bestehen, übertragen. Anstelle von Cr kommen vor allem Wolfram und Wolframcarbid als in den Kontaktträger einbringbare Komponente des Kontaktmaterials in Betracht, wobei der Kontaktträger vorzugsweise Cu als Kontaktmaterialkomponente aufweist.

Anders als bei einem zweiteiligen Aufbau eines Schaltkontaktes, bei dem das Kontaktelement stets eine Mindestmaterialstärke von beispielsweise drei bis fünf Millimeter CuCr oder WCu aufweist, sofern dieses Kontaktelement als Halbzeug hergestellt wurde und vor dem Verbinden mit dem Kontaktträger spanend nachbearbeitet werden musste, kann der jetzt herstellbare, die Funktion des Kontaktelements übernehmende, oberflächennahe Bereich des Kontaktträgers eine deutlich geringere Materialstärke aufweisen, beispielsweise eine Stärke von lediglich einem Millimeter CuCr oder WCu. Dadurch kann Kontaktmaterial eingespart werden. Zugleich kann der mit dem Kontaktbereich versehene Kontaktträger, mit anderen Worten die Kontaktträger-Kontaktelement-Kombination, nachträglich weiterbearbeitet werden, beispielsweise durch eine spanende Bearbeitung mittels einer Fräse.

Durch den vorgeschlagenen Prozess wird innerhalb des Kontaktträgers ein Funktionsbereich geschaffen, der die Funktion des Kontaktelements übernimmt. Der einstufige Prozess ist mit großen Zeitersparnissen verbunden, da der zuvor zwingend benötigte Verbindungsschritt entfällt. Darüber hinaus wird von derjenigen Komponente (z. B. Cr, W) des Kontaktmaterials weniger benötigt, die in erster Linie für die mechanischen Eigenschaften des Kontaktelements zuständig ist. Der Anteil der anderen Komponente des Kontaktmaterials, die in erster Linie für die elektrischen Eigenschaften des Kontaktelements zuständig ist und bei der es sich, obgleich grundsätzlich auch ein anderes elektrisch leitfähiges Material verwendbar ist, in aller Regel um Cu handeln wird, ist insgesamt erhöht, da diese Komponente in dem gesamten Trägerelement vorhanden ist. Dies führt zu einer verbesserten elektrischen Leitfähigkeit des Gesamtbauelements, was zu geringeren Verlusten und einer geringeren Erwärmung der Vakuumröhre führt. Der neuartige Herstellungsprozess hebt die bisherigen Beschränkungen der Fertigung auf und erlaubt neue, flexible Fertigungsabläufe. Zugleich können durch eine flexible Gestaltung des Kontaktträgers neuartige Designs und Kontaktgeometrien auf besonders einfache Weise verwirklicht werden. Zudem sind neuartige Ansätze hinsichtlich Materialauswahl und Gefügeausbildung möglich.

Das vorgeschlagene Verfahren zur direkten Herstellung einer Kontaktelement-Kontaktträger-Kombination ist ganz besonders vorteilhaft für Schaltkontakte im Bereich der Mittel- und Hochspannungstechnik einsetzbar.

Während zuvor beschrieben wurde, wie der Kontaktträger selbst die Funktion auch des Kontaktelements übernimmt, wird gemäß einer weiteren Idee der vorliegenden Erfindung vorgeschlagen, die Zweiteilung von Kontaktträger und Kontaktelement beizubehalten, dabei jedoch das Kontaktelement seinerseits mehrteilig auszuführen. Dabei wird das bereits zuvor beschriebene Vorgehen beibehalten, wonach das Kontaktelement erst im Verlauf des FAST-Verfahrens erzeugt wird.

Gemäß dieser Idee umfasst das Kontaktelement wenigstens zwei benachbarte Kontaktelementabschnitte (Anspruch 5). Dabei ist ein erster Kontaktelementabschnitt durch ein bereits vor Beginn des FAST-Verfahrens vorhandenes Volumenelement gebildet. Ein zweiter, mit dem ersten Kontaktelementabschnitt verbundener Kontaktelementabschnitt wird durch das FAST-Verfahren hergestellt. Bei dem Volumenelement handelt es sich vorzugsweise um einen elektrisch leitenden Körper, insbesondere ein massives metallisches Halbzeug, beispielsweise in Form einer Scheibe oder eines Ringes. Durch das FAST-Verfahren wird dabei zugleich die Verbindung zwischen den Kontaktelementabschnitten hergestellt. Anders ausgedrückt wird der zweite Kontaktelementabschnitt auf dem ersten Kontaktelementabschnitt aufgebaut. Der erste Kontaktelementabschnitt dient als Träger für den zweiten Kontaktelementabschnitt.

In einer bevorzugten Ausführungsform wird, wie bei der zuvor beschriebenen Ausführungsform der Erfindung, die Verbindung von Kontaktelement und Kontaktträger ebenfalls durch das FAST-Verfahren hergestellt, so dass der zusätzliche Schritt des Verbindens des Kontaktelements mit dem Kontaktträger, beispielsweise durch Löten oder Schweißen, entfällt (Anspruch 6). Mit anderen Worten wird das mehrteilige Kontaktelement mittels FAST mit dem Kontaktträger verbunden. Vorzugsweise erfolgt dabei die Herstellung des mehrteiligen Kontaktträgers und das Verbinden mit dem Kontaktträger wiederum in einem einzigen Prozessschritt. Anders ausgedrückt wird das FAST-Verfahren gleichzeitig sowohl zum Sintern von Kontaktmaterial, als auch zur Verbindung des Kontaktelements mit dem Kontaktträger eingesetzt, um einen Schaltkontakt herzustellen.

In einer Ausführungsform der Erfindung wird ein CuCr-Kontaktelementabschnitt auf einem metallischen Halbzeug hergestellt. Weist das metallische Halbzeug keinen Cr-Anteil oder einen geringeren Cr-Anteil als der CuCr-Kontaktelementabschnitt auf, sinkt der Cr-Anteil in dem Kontaktelement insgesamt, was zu einer höheren elektrischen Leitfähigkeit und somit zu geringeren Verlusten sowie zu einer geringeren Erwärmung der Vakuumröhre führt. Durch die Einsparung von Cr-Material ergibt sich ein Potenzial zur Kostensenkung, da Cr-Pulver etwa doppelt so teuer ist wie Cu-Pulver. Entsprechendes gilt wiederum, wenn statt Chrom andere Komponenten verwendet werden, wie beispielsweise Wolfram oder Wolframcarbid. Darüber hinaus kann eine bestimmte Gesamtdicke des Kontaktelements kostengünstig erhalten bleiben, was zu einer leichteren Weiterverarbeitung führt, z. B. eine bessere Spannbarkeit beim CNC-Fräsen. Zudem kann das metallische Halbzeug so ausgeführt sein, dass die Zähigkeit des auf dem Halbzeug gebildeten Kontaktelements gegenüber einer Variante ohne Volumenelement erhöht ist.

Vor allem dann, wenn das mehrteilige Kontaktelement direkt auf den Kontaktträger gesetzt und in einem einstufigen FAST-Prozess verarbeitet wird, der sowohl das Sintern des Metallpulvers als auch die stoffschlüssige Verbindung von Kontaktmaterial mit Volumenelement sowie Volumenelement mit Kontaktträger beinhaltet, ergibt sich eine erhebliche Kosten- und Zeitersparnis.

Auch bei allen zuletzt beschriebenen Ausführungsformen der Erfindung, bei denen ein Sinterprozess auf einem metallischen Substrat durchgeführt wird, kann zur Herstellung von Schaltkontakten mit besonders vorteilhaften Eigenschaften das Kontaktmaterial vor dem Sinterprozess derart bereitgestellt werden, dass sich die Materialzusammensetzung des Kontaktmaterials und/oder wenigstens eine Eigenschaft des Kontaktmaterials in wenigstens einer Körperrichtung des fertigen Kontaktelements ändert. Insbesondere kann bei der Herstellung einer einteiligen Kontaktträger-Kontaktelement-Kombination die in den Kontaktträger einzubringende Komponente des Kontaktmaterials in einer sich graduell ändernden Materialzusammensetzung vorliegen oder aber bei der Bildung des zweiten Kontaktelementabschnitts auf einem bereits vorhandenen ersten Kontaktelementabschnitt mittels eines FAST-Verfahrens liegt eine sich graduell ändernden Materialzusammensetzung des Materials des zweiten Kontaktelementabschnitts vor. Viele weitere Anwendungen sind möglich, beispielsweise mit Hilfe von Dotierungen oder bei der Verwendung mehrkomponentiger Pulver.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
- FIG 1: eine Vakuumröhre,
- FIG 2: einen ersten Schaltkontakt,
- FIG 3: einen zweiten Schaltkontakt,
- FIG 4: einen dritten Schaltkontakt,
- FIG 5: eine SPS-Anlage zur Herstellung eines Kontaktelements,
- FIG 6: eine SPS-Anlage zur Herstellung einer ersten Kontaktträger-Kontaktelement-Kombination,
- FIG 7: eine SPS-Anlage zur Herstellung einer zweiten Kontaktträger-Kontaktelement-Kombination,
- FIG 8: eine SPS-Anlage zur Herstellung einer dritten Kontaktträger-Kontaktelement-Kombination,
- FIG 9: eine SPS-Anlage zur Herstellung eines ersten Kontaktelements mit eingelegtem Volumenelement,
- FIG 10: eine SPS-Anlage zur Herstellung eines zweiten Kontaktelements mit eingelegtem Volumenelement,
- FIG 11: eine SPS-Anlage zur einstufigen Herstellung eines mit einem Kontaktträger verbundenen Kontaktelements mit eingelegtem Volumenelement,
- FIG 12: eine erste Kontaktträger-Kontaktelement-Kombination,
- FIG 13: eine zweite Kontaktträger-Kontaktelement-Kombination,
- FIG 14: ein mit einem Kontaktträger verbundenes Kontaktelement mit eingelegtem Volumenelement.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

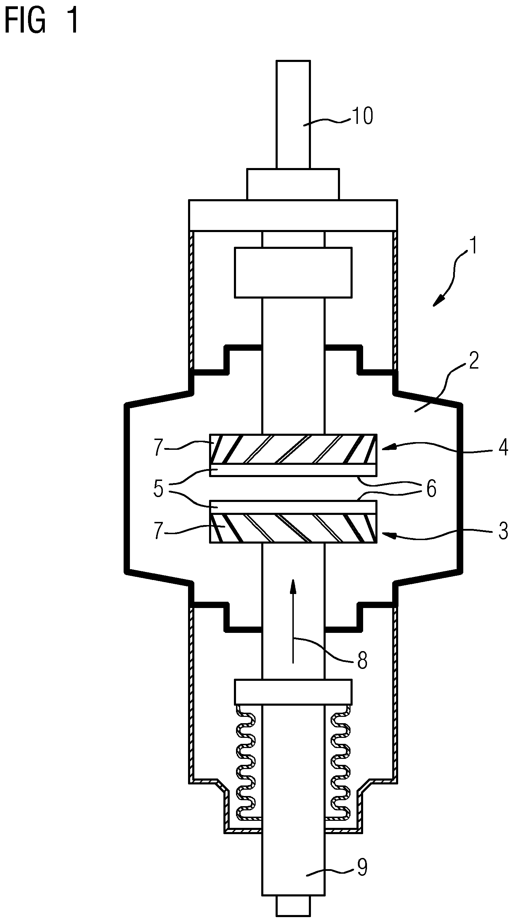

In einer Vakuumröhre 1, wie sie beispielsweise für elektrische Leistungsschalter verwendet wird, umfasst die in einer Schaltkammer 2 angeordnete Schaltanordnung beispielsweise zwei koaxial angeordnete Schaltkontakte 3, 4 mit Kontaktelementen 5, deren Schaltflächen (Kontaktoberflächen) 6 einander zugewandt sind, siehe FIG 1. Die Kontaktelemente 5 sitzen auf Kontaktträgern 7. In dem hier illustrierten Beispiel ist einer der Schaltkontakte 3 in Axialrichtung 8 bewegbar. Zu diesem Zweck ist der bewegliche Schaltkontakt 3 mit einem beweglichen Anschlussbolzen 9 verbunden, während der feste Schaltkontakt 4 mit einem festen Anschlussbolzen 10 verbunden ist.

Nachfolgend werden beispielhaft Verfahren zur Herstellung von Kontaktelement-Halbzeugen für elektrische Schaltkontakte 3, 4 für Vakuumröhren 1, Verfahren zur Herstellung von Kontaktelementen 5 für elektrische Schaltkontakte 3, 4 für Vakuumröhren 1 und Verfahren zur Herstellung von elektrischen Schaltkontakten 3, 4 für Vakuumröhren 1 beschrieben. All diesen Verfahren ist gemein, dass die Herstellung des Kontaktelements 5 mittels eines FAST-Prozesses erfolgt. Das bedeutet, dass ein elektrisches oder elektromagnetisches Feld die Herstellung unterstützt, indem dieses Feld einen Sintervorgang unterstützt und/oder hervorruft.

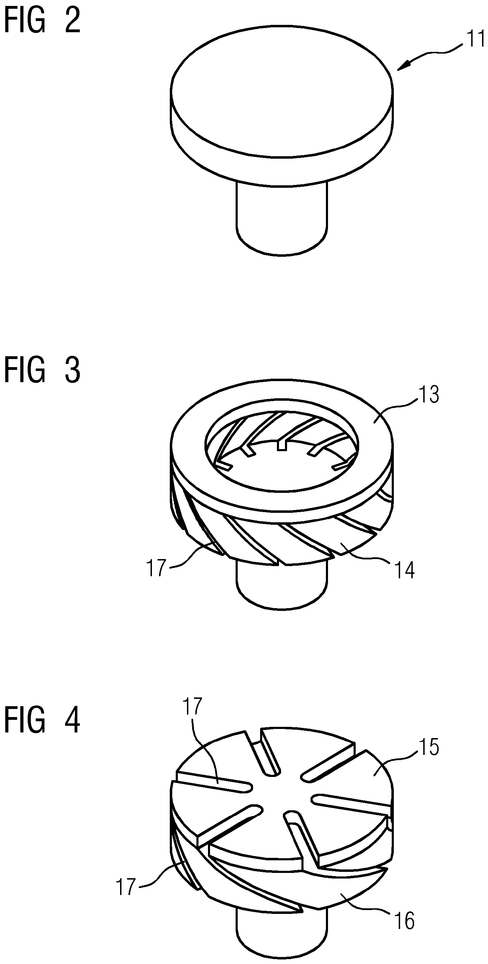

Die beschriebenen Verfahren sind nicht auf bestimmte Kontaktgeometrien beschränkt. Stattdessen sind die Verfahren auf Kontaktelemente 5 mit unterschiedlichen Kontaktgeometrien anwendbar. FIG 2 zeigt beispielhaft einen einfachen Schaltkontakt (Plattenkontakt) 11, bestehend aus einem scheibenförmigen Kontaktelement. FIG 3 zeigt einen Radialmagnetfeld (RMF)-Kontakt in Gestalt eines geschlitzten Topfkontaktes mit einem ringförmigen Kontaktelement 13 auf einem geschlitzten Kontaktträger 14 und FIG 4 zeigt einen Axialmagnetfeld (AMF)-Kontakt mit einer radial geschlitzten Kontaktscheibe 15 auf einem spiralförmig geschlitzten Kontaktträger 16. Diese und weitere Kontaktgeometrien, sowie die Anordnung von Schlitzen 17 in dem Kontaktträger 7 bzw. dem Kontaktelement 5 sind dem Fachmann bekannt und nicht Gegenstand der Erfindung.

In allen nachfolgend beschriebenen Fällen kommt beispielhaft das Spark-Plasma-Sintering (SPS)-Verfahren zur Anwendung, ohne dass dies einschränkend zu verstehen ist. Andere FAST-Verfahren können ebenfalls angewendet werden, wobei die erfindungsgemäßen Besonderheiten entsprechend auch auf diese Verfahren zutreffen bzw. anwendbar sind.

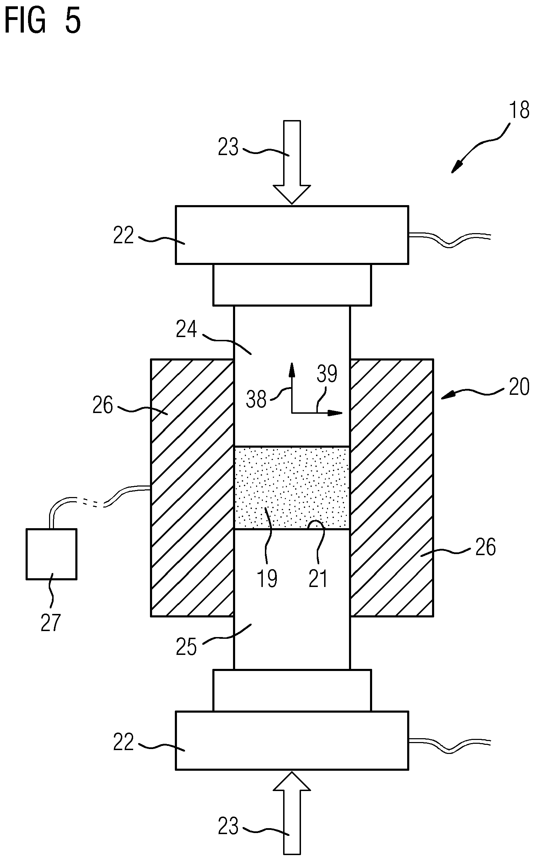

Aufbau und Funktionsweise einer SPS-Anlage 18 sind dem Fachmann bekannt, so dass nachfolgend nur die wesentlichen Teile einer solchen Anlage kurz behandelt werden. Wie in FIG 5 abgebildet, befindet sich das pulverförmige Sintermaterial 19, das den späteren Pressling bildet, auf dem Unterboden 21 der durch das Presswerkzeug 20 gebildeten Sinterform (Matrize). Bei dem Pressling handelt es sich entweder um ein Halbzeug (nicht abgebildet), welches in einem späteren Zwischenschritt noch spanend nachbearbeitet werden muss, oder um ein endkonturnahes oder bereits fertig geformtes Kontaktelement 5.

In dieser Ausführungsform werden sowohl das Presswerkzeug 20, als auch der Pressling direkt beheizt. Dies erfolgt durch Energiezufuhr über das Presswerkzeug 20 von außen und durch einen direkten Stromdurchgang durch den Pressling selbst. Hierzu sind zwei den beiden äußeren Stirnseiten des Presslings zugeordnete Elektroden 22 an eine Gleichstrom-Impulsquelle (nicht dargestellt) angeschlossen. Durch das erzeugte elektrische bzw. elektromagnetische Feld wird ein Sintervorgang initiiert, der aus dem Sintermaterial den gewünschten Sinterkörper formt.

Der erforderliche Pressdruck, in FIG 5 durch zwei Pfeile 23 symbolisiert, wird durch einen mit einem Hydrauliksystem (nicht abgebildet) verbundenen Oberstempel 24 aufgebracht, der mit einem Unterstempel 25 zusammenwirkt. Die Matrizenwände 26 sind mit Temperatursensoren 27 sowie erforderlichenfalls mit einer elektrischen Zusatzheizung (nicht dargestellt) versehen. Das Presswerkzeug 20 befindet sich vollständig in einem wassergekühlten Vakuumbehälter (nicht dargestellt) .

Als Sintermaterial 19 wird eine Mischung aus zwei oder mehr metallischen oder nichtmetallischen Komponenten verwendet. Eine geeignete Wahl der Materialien ist dem Fachmann bekannt. Lediglich beispielhaft wird, sofern nicht ausdrücklich anders angegeben, nachfolgend davon ausgegangen, dass ein pulverförmiges Kupfer-Chrom-Sintermaterial 19 verwendet wird. Dabei hat sich eine Kombination mit beispielsweise 50% bis 75% Kupfer und 25% bis 50% Chrom bewährt. Die genaue Zusammensetzung der verwendeten Komponenten, ob also für das Kupfer beispielsweise reines Cu-Pulver, ein Kupferbasiswerkstoff oder dergleichen verwendet wird, ist für die vorliegende Erfindung von untergeordneter Bedeutung. Gleiches gilt entsprechend für alle anderen Komponenten des Sintermaterials 19.

In einem ersten Ausführungsbeispiel der Erfindung wird, wie in FIG 5 abgebildet, zur Herstellung eines Kontaktelements 5, das anschließend mit einem passenden Kontaktträger 7 mittels eines Löt- oder Schweißvorgangs zu einem elektrischen Schaltkontakt 3, 4 verbunden werden kann, ein passendes Pulvergemisch, beispielsweise CuCr, in eine Matrize gefüllt, wobei insbesondere auf Korngrößen, Korngrößenverteilung und Reinheit zu achten ist. Die Matrize ist der Form des herzustellenden Halbzeugs bzw. des Kontaktelements 3, 4 angepasst. Zur Herstellung eines beispielsweise scheibenförmigen Kontaktelements 3, 4 ist die Form ebenfalls scheibenförmig ausgeführt. Mit dem Einsetzen des Oberstempels 24 wird die Matrize nach oben geschlossen. Es schließt sich der Sintervorgang an.

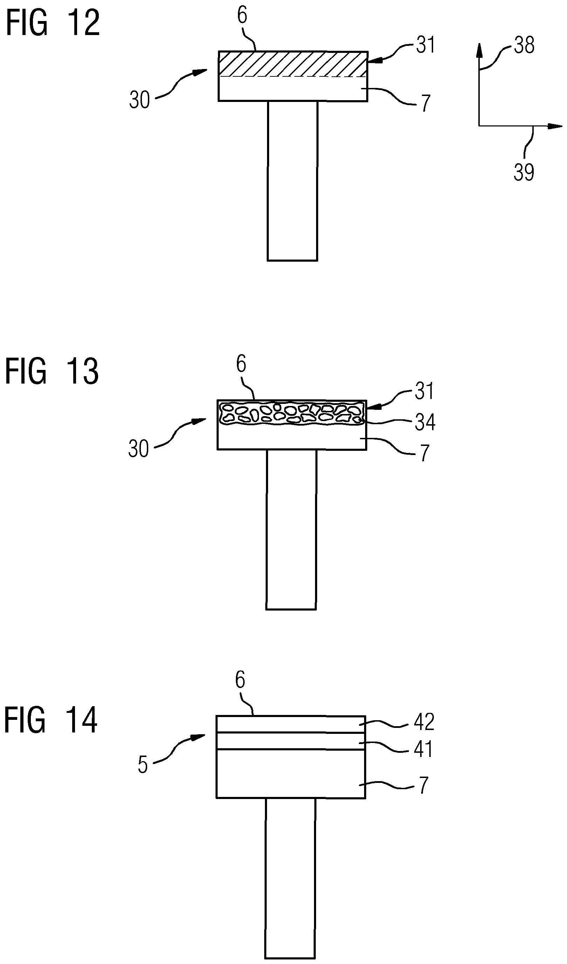

In einem zweiten Ausführungsbeispiel der Erfindung wird eine einteilige Kontaktträger-Kontaktelement-Kombination 30 hergestellt, siehe FIG 12, indem ein Bereich 31 eines vorhandenen Kontaktträgers 7 mittels eines FAST-Verfahrens derart verändert wird, dass dieser Bereich 31 als Kontaktelement dienen kann. Mit anderen Worten wird in einem einstufigen Prozess ein fertiger Schaltkontakt 3, 4 hergestellt.

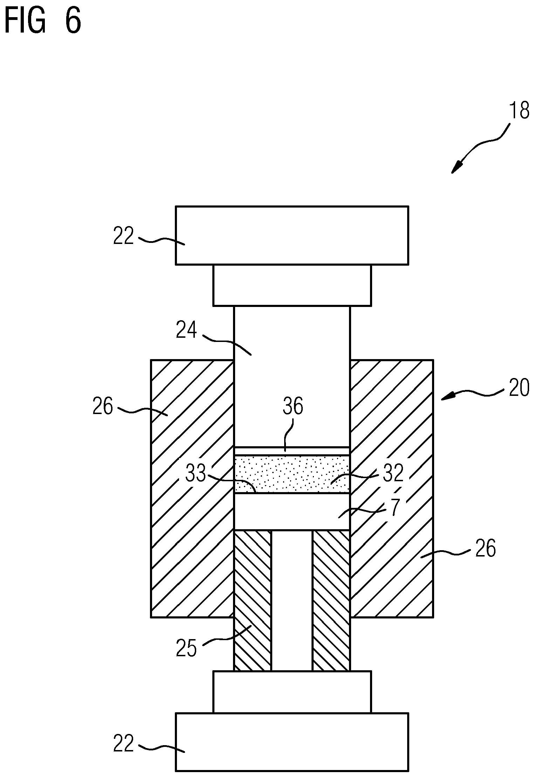

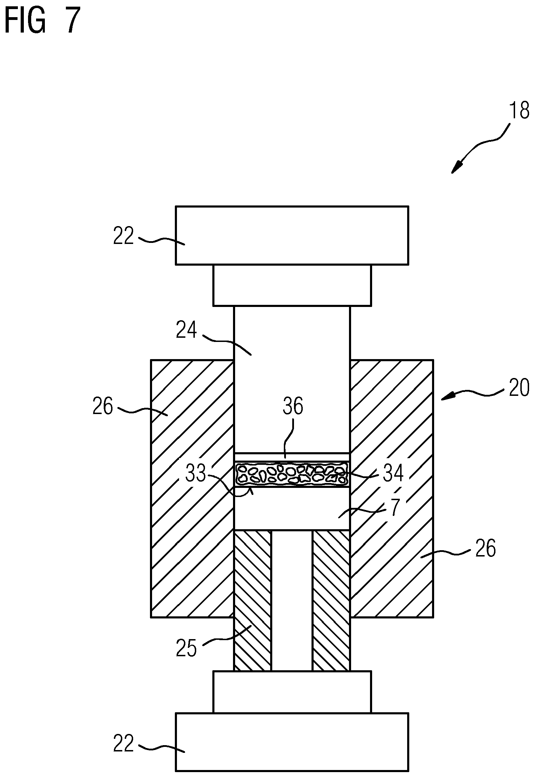

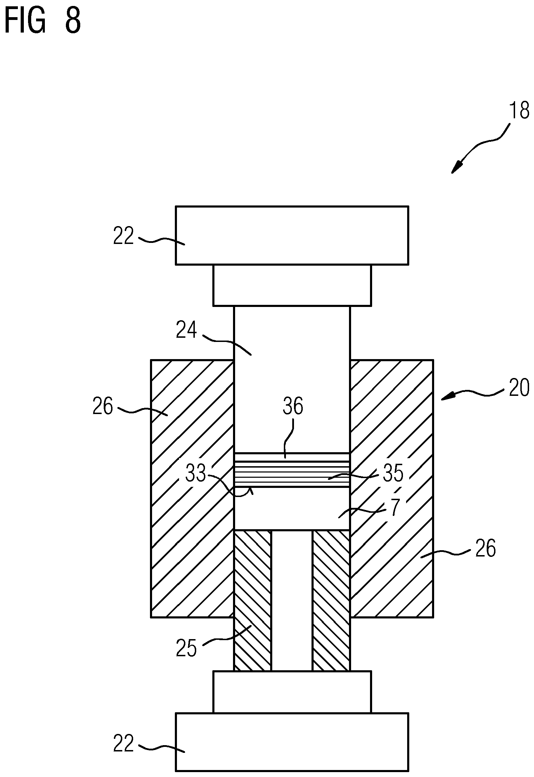

Der Kontaktträger 7 weist hierzu eine erste Komponente des Kontaktmaterials auf, während eine zweite Komponente des Kontaktmaterials in den oberflächennahen Bereich 31 des Kontaktträgers eingebracht wird. Im beschriebenen Beispiel handelt es sich um einen Cu-Kontaktträger 7, in dessen oberflächennahen Bereich 31 Chrom eingebracht wird. Dadurch ergibt sich in diesem Bereich 31 das gewünschte CuCr-Kontaktmaterial. Zu diesem Zweck wird, wie in FIG 6 dargestellt, ein vorgeformter Kontaktträger 7 direkt in die Matrize der SPS-Anlage eingesetzt. Anschließend wird die für die Funktion der späteren Kontaktoberfläche 6 notwendige Menge der fehlenden Materialkomponente, hier Cr-Pulver 32, auf der Oberseite 33 des Kontaktträgers 7 verteilt. Dies erfolgt in Form einer losen Pulverschüttung. Das Chrom-Material 32 kann aber auch in Gestalt eines vorgepressten porösen Halbzeugs 34 (FIG 7) oder als Grünfolie 35 (FIG 8) bereitgestellt werden, wie dies weiter unten genauer beschrieben wird.

Im Anschluss daran wird in dem hier beschriebenen Ausführungsbeispiel auf die Lage aus Cr-Pulver 32 eine Press-Hilfsscheibe 36 gesetzt. Die optional verwendbare Hilfsscheibe 36 besteht aus einem vergleichsweise harten und vorzugsweise elektrisch leitenden Material, wie Metall, Keramik, Graphit oder dergleichen, um die Stromleitung während des Sintervorgangs nicht negativ zu beeinflussen. Vorzugsweise wird eine Hilfsscheibe 36 aus beschichtetem Hartmetall verwendet. Die Hilfsscheibe 36 dient u. a. als Anti-Haftmittel und als Koppelelement für die Kraftübertragung. Insbesondere dient die Hilfsscheibe 36 aber als Verschleißschutz, also dazu, eine starke Abnutzung der Matritze zu vermeiden, die dadurch entstehen könnte, dass das vergleichsweise harte und scharfkantige Chrompulver 32 bei den üblichen Prozesstemperaturen nicht in dem sonst üblichen Maße erweicht. Die Hilfsscheibe 36 nutzt sich nach und nach ab und wird bei Bedarf ausgetauscht.

Mit dem Einsetzen des Oberstempels 24 wird die Matrize nach oben geschlossen. Im Verlauf des Sintervorgangs wird das Cr-Pulver 32 in das erweichende Material des Kontaktträgers 7 gedrückt. Es entsteht in einem oberflächennahen Bereich 31 des Kontaktträgers 7, vorzugsweise in einem zwischen 100 µm und etwa 3 mm starken Bereich unterhalb der Kontaktoberfläche 6, ein CuCr-Kompositgefüge aus einer 3D-vernetzten Matrixphase (Cu) und einem darin eingelagerten, idealerweise perkolierten dreidimensionalen Cr-Skelett. Dabei berühren sich die Chromkörner und stützen sich gegenseitig, so dass sie größere mechanische Kräfte aufnehmen können.

Die Prozessparameter, insbesondere Prozessgeschwindigkeit und Prozesstemperatur, können so gewählt werden, dass zusätzlich physikalische Vorgänge und/oder chemische Reaktionen zwischen der Cr- und der Cu-Phase stattfinden, welche die Materialeigenschaften des als Kontaktelement dienenden oberflächennahen Bereiches 31 des Kontaktträgers 32 verbessern. Dabei kann es sich um zusätzliche Legierungs-, Lösungs- und/oder Wiederausscheidungsvorgänge handeln.

Wird für den die Funktion eines Kontaktelements übernehmenden Bereiche 31 Chrom in Pulverform oder in Form von Grünfolie verwendet, ist die spätere Lage des Chroms in dem Material des Kontaktträgers 7 ohne größeren Aufwand nicht exakt vorhersehbar. Wird hingegen die in den Kontaktträger 7 einzubringende Materialkomponente 32 in Gestalt eines porösen Halbzeugs 34 bereitgestellt, das während des FAST-Prozesses langsam in das weiche teigförmige Kupfermaterial des Kontaktträgers 7 eingepresst wird, ist die spätere Lage des eingebrachten Materials 34 in dem Trägermaterial genau bekannt, siehe FIG 13. Das poröse Halbzeug 34 ist vorzugsweise nach Art eines Schwammes mit sehr großen Poren oder als definiertes Chrom-Skelett ausgeführt, siehe FIG 7. Während des Einpressvorgangs füllen sich die zwischen den Stegen aus Chrom angeordneten Hohl- bzw. Zwischenräume mit dem leitfähigen Kupfermaterial des Kontaktträgers 7. Die Form des Halbzeugs 34 bleibt dabei im Wesentlichen erhalten. Durch die Verwendung eines derartigen porösen Halbzeugs 34 wird einerseits eine höhere Materialfestigkeit des oberflächennahen Bereiches 31 und andererseits eine bessere Steuerung des Lichtbogens erreicht.

Läuft das FAST-Verfahren bei vergleichsweise hohen Temperaturen im Bereich der Schmelztemperatur von Kupfer ab, befindet sich gemäß einer bevorzugten Ausführungsform der Erfindung der größte Teil der Kontaktträger-Kontaktelement-Kombination 30 in einem kühleren Bereich der Matrize. Hierzu wird erforderlichenfalls ein entsprechender Bereich der Matrize aktiv gekühlt. Da zudem die heiße Prozesszone bei FAST-Prozessen sehr stark begrenzt ist, wird eine derart gekühlte Kontaktträger-Kontaktelement-Kombination 30 durch den Sinterprozess weder verformt, noch im Gefüge verändert. Anders ausgedrückt kommt es trotz der hohen Prozesstemperaturen nicht zu nachteiligen Effekten, wie bspw. Kristallitvergrößerungen.

Zur Verbesserung und/oder Beschleunigung der Ausbildung des Kompositgefüges in dem oberflächennahen Bereich 31 während des Sintervorgangs und zur Erzielung größerer Eindringtiefen (bspw. bis 3 mm) für das in Pulverform vorliegende Chrom 32 ist es in einem weiteren Ausführungsbeispiel der Erfindung vorgesehen, den oberflächennahen Bereich 31 des Kontaktträgers 7 porös oder strukturiert auszubilden. So können beispielsweise Vertiefungen, Rillen oder Näpfchen (nicht dargestellt) auf der Oberseite 33 des Kontaktträgers 7 vorgesehen sein. Das vereinfacht das Einbringen von Material in den Kontaktträger 7. Zugleich wird damit auch eine homogenitätsfördernde zusätzliche Verdichtung im Verlauf des FAST-Prozesses ermöglicht.

Die Verteilung des Cr-Pulvers 32 im Trägermaterial kann sowohl in Dickenrichtung 38, hier entsprechend der axialen Bewegungsrichtung 8 beim Öffnen bzw. Schließen des Kontaktes, als auch in einer senkrecht dazu verlaufenden radialen Richtung 39 des Kontaktträgers 7 mit einer sich graduell ändernden Konzentration ausgeführt werden, wie dies weiter unten im Zusammenhang mit einem anderen Ausführungsbeispiel näher erläutert ist.

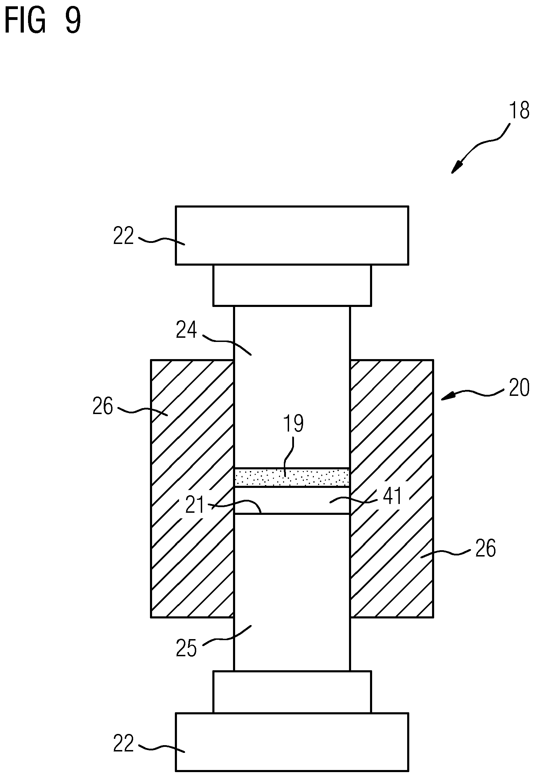

In einem weiteren Ausführungsbeispiel der Erfindung wird, wie in FIG 9 dargestellt, auf einem vorhandenen ersten Abschnitt 41 des Kontaktelements 5 mittels eines FAST-Verfahrens ein zweiter Kontaktelementabschnitt 42 gebildet.

Während bei den bisher bekannten Verfahren zur Herstellung eines Kontaktelements 5 das Kontaktelement 5 vollständig aus gesintertem Pulver besteht, wird jetzt ein Teil des Volumens des Pulvers 19 durch den ersten Kontaktelementabschnitt 41 ersetzt. Dieser erste Kontaktelementabschnitt 41 dient dabei als Volumenelement, um ein bestimmtes Pulvervolumen zu ersetzen. Er weist in dem hier beschriebenen Ausführungsbeispiel die Gestalt eines massiven Metallelements, genauer gesagt die Gestalt einer Metallscheibe auf. Es kann jedoch auch ringförmig ausgeführt sein. Dieses Volumenelement 41 in Form einer wenige Millimeter dicken Scheibe ist leitfähig. Es besteht in dem hier beschriebenen Beispiel aus Edelstahl oder Kupfer. Zur Erzeugung vorteilhafter elektromagnetischer Felder kann das Volumenelement 41 entsprechend strukturiert sein, beispielsweise Schlitze 17 aufweisen. Die Anordnung derartiger Schlitze 17 ist dem Fachmann bekannt und bedarf daher an dieser Stelle keiner weiteren Erläuterung.

Zur Durchführung des FAST-Verfahrens (SPS) wird zunächst das vorgeformte Volumenelement 41 auf den Boden 21 der Matrize gelegt, die üblicherweise aus Graphit besteht. Dabei ist die Größe des Volumenelements 41 derart gewählt, dass der Boden 21 vollständig bedeckt ist. Anschließend wird die für die Funktion des Kontaktelements 5 notwendige Menge an CuCr-Pulver 19 auf dem Volumenelement 41 verteilt, wobei die nötige Menge an Pulver durch die zu erzielende Höhe der Kontaktmaterialschicht bestimmt wird. Diese beträgt typischerweise zwischen 0,2 mm und 3 mm.

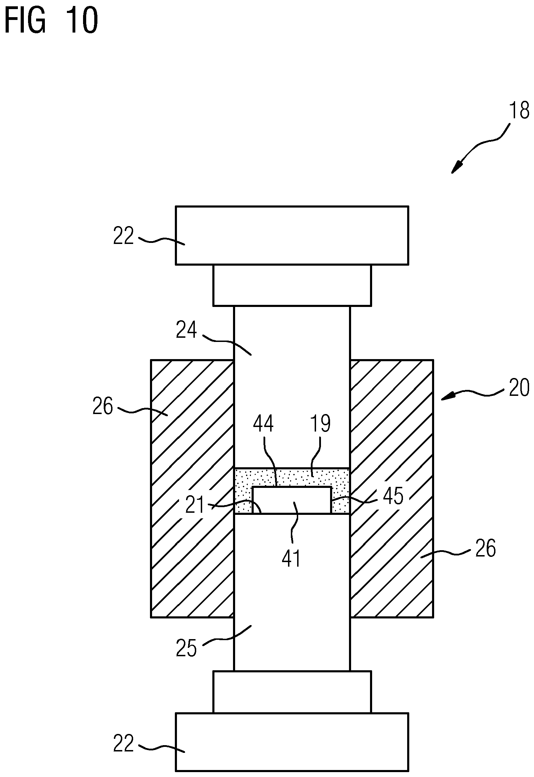

Alternativ ist der Durchmesser des Volumenelements 41 kleiner als der Matrizendurchmesser, so dass das Volumenelement 41 während des sich anschließenden Sintervorgangs nicht nur auf der Deckfläche 44, sondern auch auf der Mantelfläche 45 mit Kontaktmaterial 19 beschichtet wird, siehe FIG 10. Eine solche Randbeschichtung stellt sicher, dass später der Lichtbogen während eines Schaltvorgangs stets auf Kontaktmaterial trifft.

Danach wird die Matrize standardmäßig mit dem Oberstempel 24 verschlossen und der FAST-Prozess wird durchgeführt. Im Verlauf des Sintervorgangs verbinden sich zum einen das Cu- und das Cr-Pulver zum festen CuCr-Kontaktmaterial. Zum anderen entsteht eine stoffschlüssige Verbindung des Kupferpulvers mit dem darunter liegenden Volumenelement 41. Das so hergestellte Kontaktelement 5 wird anschließend auf herkömmliche Weise mit einem Kontaktträger 7 verbunden, beispielsweise mit Hilfe eines Löt- oder Schweißvorgangs.

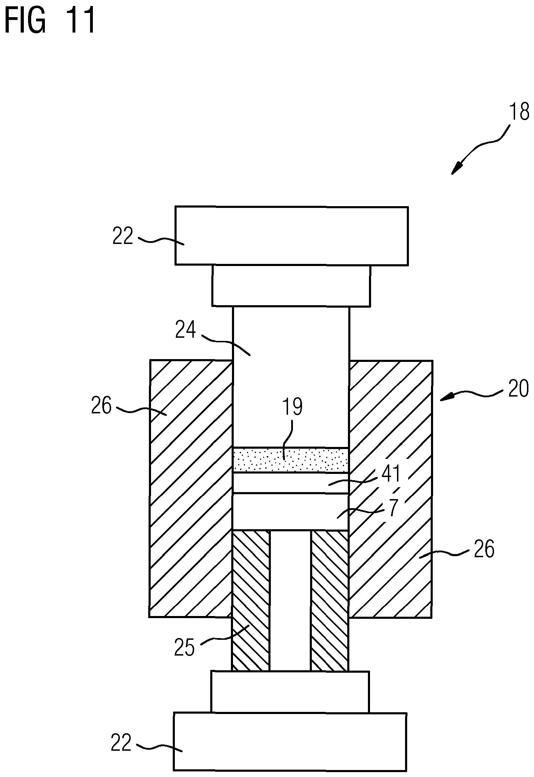

In einer abgewandelten Variante wird das so hergestellte Kontaktelement 5 mittels des FAST-Verfahrens zugleich mit dem Kontaktträger 7 verbunden. Der FAST-Prozess dient mit anderen Worten gleichzeitig zur Sinterung von Kontaktmaterial und zur Verbindung des Kontaktelements 5 mit dem Kontaktträger 7, also zur Herstellung eines kompletten Schaltelements 3, 4 in einem einstufigen Prozess. Hierzu wird der fertig geformte Kontaktträger 7 anstelle des Bodens der Matrize eingesetzt, siehe FIG 11. Während des Sinterprozesses des CuCr-Pulvers erfolgt gleichzeitig die stoffschlüssige Fügung der Metallscheibe zum Kontaktträger. Ein solches Kontaktelement ist in FIG 14 abgebildet.

Der bereits vorhandene erste Abschnitt des Kontaktelements wird für das FAST-Verfahren üblicherweise angrenzend an den Kontaktträger positioniert, d. h. das Volumenelement 41 dient als Unterlage für das darüber liegende Pulver 19, wie in den FIG 9, 10 und 11 abgebildet. Das ist insbesondere dann von Vorteil, wenn der Kontaktträger 7 Schlitze 17 zur Optimierung der Lichtbogenführung aufweist. Muss ein Eindringen des Pulvers in Schlitze 17 des Kontaktträgers 7 nicht verhindert werden, kann das Volumenelement 41 auch oberhalb des Pulvers 19 positioniert sein (nicht dargestellt). Durch eine solche Anordnung kann die Ausbildung von elektrischen Feldern vorteilhaft beeinflusst werden.

Wie bereits weiter oben beschrieben, ist die heiße Prozesszone bei FAST-Verfahren sehr stark begrenzt und der Kontaktträger 7 selbst steckt zum Großteil in einer gekühlten Matrize, so dass er durch den Sinterprozess weder verformt noch im Gefüge verändert wird. Obwohl aus diesen Gründen keine negativen Effekte erwartet werden, wird in einer bevorzugten Ausführungsform der Erfindung eine angepasste Sinteranlage eingesetzt, die einerseits eine Hybridheizung (nicht abgebildet) aufweist und andererseits eine genauere bzw. feinere, insbesondere zonenweise Überwachung und Regelung der Temperaturen erlaubt. Die Hybridheizung ist dabei vorzugsweise derart ausgeführt, dass zusätzlich zu der automatischen Erwärmung durch den Stromfluss während des Plasmasintervorgangs eine elektrische Beheizung und damit aktive Temperaturregelung der Matrizenwände 26 möglich ist.

Ganz besonders vorteilhaft ist es, wenn eine Mehrkammer-FAST-Anlage zum Einsatz kommt, in der die Durchführung der einzelnen Prozessschritte in voneinander getrennten Kammern erfolgt (nicht abgebildet). Dadurch können langsame Evakuierungs-, Vorwärm- und Abkühlprozesse vorgesehen werden, welche zu einer Prozessverbesserung, insbesondere zu einer höheren Qualität der herzustellenden Kontaktelemente führen, ohne die Produktionsraten zu verringern. Vorteilhafterweise ist die Anlage dabei derart ausgebildet, dass in einer zweiten Kammer gesintert wird, während in einer vorgelagerten ersten Kammer bereits das nächste Bauteil vorbereitet und die erste Kammer evakuiert wird. Zusätzlich können in einer dritten Kammer die Abkühlung und die Belüftung zur Bauteilentnahme stattfinden.

Bei Verwendung einer entsprechend geformten Matrize und eines ebenso geformten Volumenelements, beispielsweise in Gestalt des scheibenförmigen Volumenelements 41, lassen sich auch weitere Geometrien erzeugen, wie z. B. Spiralkontakte. Das im Vergleich zu dem eigentlichen Kontaktmaterial sehr viel zähere Volumenelement, welches typischerweise auch starke plastische Verformungen standhält, ohne Schaden zu nehmen, führt dann auch zu einer höheren Zähigkeit des Spiralkontaktes, wodurch Brüche des Kontaktelements 5 vermieden werden können. In einem weiteren Ausführungsbeispiel der Erfindung liegt das Kontaktmaterial 19 vor dem Sinterprozess derart vor, dass sich die Materialzusammensetzung des Kontaktmaterials 19 und/oder wenigstens eine Eigenschaft des Kontaktmaterials 19 in wenigstens einer Körperrichtung 38, 39 des Kontaktelements 5 ändert. Dabei handelt es sich um eine definierte graduelle Änderung der Materialzusammensetzung und/oder der wenigstens einen Eigenschaft des Kontaktmaterials 19. Diese besondere Ausgestaltung kann ohne weiteres auf alle zuvor beschriebenen Ausführungsbeispiele angewendet werden.

In einem einfachen Ausführungsbeispiel wird anstelle eines homogenen Pulvergemischs eine gradierte Pulverschüttung verwendet. Eine Gradierung in Dickenrichtung 38 des späteren Kontaktelements 5 wird erreicht, indem das Metallpulver in übereinander liegenden Schichten in die Matrize gefüllt wird, wobei in einer bestimmten Anzahl von Zwischenschritten, also von Lage zu Lage, Metallpulver mit einem steigenden Chromanteil verwendet wird. Im einfachsten Fall enthält dabei jede Schicht eine konstante Materialzusammensetzung.

Besonders vorteilhaft ist es, wenn in der ersten Metallpulver-Schicht, dem späteren Interface zu dem Kontaktträger 7, reines Kupferpulver verwendet wird, um eine besonders gute Verbindung zu dem Kontaktträger 7 zu erreichen. In der obersten Schicht, der späteren Kontaktoberfläche 6, wird CuCr mit der erforderlichen Zusammensetzung verwendet. Je kleiner die Höhe der einzelnen Schichten eingestellt wird, umso homogener sind die Übergänge in der Materialzusammensetzung. Bei Verwendung eines geeigneten Schichtungsverfahrens können, vor allem bei sehr geringen Schichthöhen, auch kontinuierliche Konzentrationsänderungen der einzelnen Komponenten erreicht werden.

Um weitere vorteilhafte Eigenschaften des späteren Kontaktelements 5 zu erreichen, können in einem weiteren Ausführungsbeispiel die einzelnen Schichten zudem verschiedene Höhen aufweisen. Vorzugsweise liegen die Höhen der einzelnen Schichten mindestens im Bereich der maximalen Korngröße, um eine homogene Pulvermischung innerhalb der einzelnen Schichten zu gewährleisten.

In einem weiteren Ausführungsbeispiel wird der Chromanteil kontinuierlich erhöht bzw. verringert, indem bei der Befüllung der Matrize, beispielsweise aus einem Zweischnecken-Mischsystem (nicht abgebildet), kontinuierlich mehr bzw. weniger Chrompulver zum Pulvergemisch zugeführt wird.

Die weiteren Schritte zur Herstellung des Kontaktelements 5 entsprechen dann dem üblichen Vorgehen der verschiedenen FAST-Verfahren, beispielsweise dem Spark-Plasma-Sintern.

Neben einer Gradierung in Dickenrichtung 38 des Kontaktelements 5 kann ebenfalls eine alleinige oder zusätzliche Gradierung in radialer Richtung 39 des Kontaktelements 5 vorteilhaft sein, um zum Beispiel die Lichtbogenwanderung zu beeinflussen bzw. den Bereich, in welchem der Lichtbogen brennt, zu vergrößern. Zur Erzielung einer solchen radialen Gradierung wird analog zum oben beschriebenen Verfahren vorgegangen.

Für die Funktion und Zuverlässigkeit des Kontaktelements 5 ganz besonders vorteilhaft ist es, wenn eine nach außen hin radial ansteigende Cr-Konzentration bereitgestellt wird. Dies ist mit dem hier beschriebenen Verfahren besonders einfach darstellbar und ein Vorteil gegenüber anderen Verfahren, beispielsweise dem Lichtbogenumschmelzen.

Die Schichtabfolge der Gradierungsstruktur kann alternativ zu einer entsprechend modifizierten Pulverschüttung auch durch die Stapelung und Lamination von auf Maß geschnittenen Grünfolien 35 dargestellt werden, siehe beispielsweise FIG 8. Solche Grünfolien 35, bestehend aus den entsprechenden Metallpulvern, beispielsweise CuCr, in einer organischen Bindermatrix, werden typischerweise über einen Foliengießprozess hergestellt. Vor der Sinterung werden die Grünfolien 35 thermisch oder vorzugsweise chemisch entbindert. Zudem ist eine Strukturierung der Grünfolien möglich, z. B. durch Einbringung von Löchern zur besseren Durchmischung und Verbindung der Komponenten der einzelnen Folienlagen. Vorteile dieser Verfahrensroute liegen in der Vorfertigbarkeit und möglichen Lagerhaltung der Grün- und Braunlinge, der Gewährleistung von engen Mischtoleranzen und hohen Homogenitätsanforderungen sowie in der einfachen Verarbeitbarkeit der Grünfolien 35. Die Verwendung von Grünfolie 35 ist zudem von Vorteil, weil mit deren Hilfe besonders einfach Multi-Komponenten-Materialsysteme bereitgestellt werden können, beispielsweise, indem Grünfolien 35 unterschiedlicher Komposition miteinander kombiniert werden. Auch können wiederum Zusatzstoffe, wie Tellur und Bismut, auf definierte Weise in das Kontaktelement 5 eingebracht werden.

Die Verwendung von Grünfolien 35 ist besonders vorteilhaft, wenn direkt auf strukturierten (z. B. geschlitzten) Kontaktträgern 7 gesintert wird, da im Gegensatz zur Herstellungsroute über Metallpulver diese Strukturen erhalten bleiben, wohingegen Pulver in die darunter liegenden Schlitze gelangen kann und diese unter Umständen vollständig ausfüllt. Grünfolien 35 können zudem anstelle der zuvor beschriebenen Metallscheiben als erste Volumeneinheit 41 von Kontaktelementen 5 eingesetzt werden, wobei das Herstellungsverfahren ansonsten unverändert bleibt. Somit können in einer bevorzugten Ausführungsform der Erfindung auch Grünfolien 35 und Pulverschüttung miteinander kombiniert werden.

Kontaktelemente 5 mit sich graduell ändernden Materialzusammensetzungen bzw. Materialeigenschaften sind jedoch nicht nur mit Hilfe von pulverförmigen Ausgangsmaterialien 19 oder mit Grünfolie 35 herstellbar. So ist es beispielsweise auch möglich, eine graduelle Änderung der Materialzusammensetzung bei der Herstellung einer Kontaktträger-Kontaktelement-Kombination 30 zu erreichen, indem ein poröses Halbzeug 34 mit einer sich definiert ändernden Dichte verwendet wird, siehe FIG 7. Hierzu kann beispielsweise ein poröses Halbzeug 34 verwendet werden, bei dem sich der Abstand der Porenkanäle zueinander in definierter Weise in Dickenrichtung 38 und/oder in radialer Richtung 39 ändert.

Obwohl die Erfindung im Detail durch die bevorzugten Ausführungsbeispiele näher illustriert und beschrieben wurde, so ist die Erfindung nicht auf die offenbarten Beispiele eingeschränkt und andere Variationen können vom Fachmann hieraus abgeleitet werden, ohne den Schutzumfang der Erfindung zu verlassen. Insbesondere kann die zuletzt beschriebene Gradierung bei sämtlichen zuvor beschriebenen Verfahren vorteilhaft eingesetzt werden, ebenso wie die Grünfolien 35 oder porösen Halbzeuge 34 anstelle einer Pulverfüllung 19.

### Bezugszeichenliste

- 1: Vakuumröhre
- 2: Schaltkammer
- 3: beweglicher Schaltkontakt
- 4: fester Schaltkontakt
- 5: Kontaktelement
- 6: Schaltfläche, Kontaktoberfläche
- 7: Kontaktträger
- 8: Axialrichtung
- 9: beweglicher Anschlussbolzen
- 10: fester Anschlussbolzen
- 11: Plattenkontakt
- 13: Kontaktring
- 14: Kontaktträger
- 15: Kontaktscheibe
- 16: Kontaktträger
- 17: Schlitz
- 18: SPS-Anlage
- 19: Sintermaterial, Pulver
- 20: Presswerkzeug
- 21: Unterboden
- 22: Elektrode
- 23: Pressdruck
- 24: Oberstempel
- 25: Unterstempel
- 26: Matrizenwand
- 27: Temperatursensor
- 30: Kontaktträger-Kontaktelement-Kombination
- 31: oberflächennaher Bereich des Kontaktträgers
- 32: Materialkomponente
- 33: Oberseite des Kontaktträgers
- 34: poröses Halbzeug
- 35: Grünfolie
- 36: Hilfsscheibe
- 38: Dickenrichtung
- 39: radiale Richtung
- 41: erster Kontaktelementabschnitt, Volumenelement
- 42: zweiter Kontaktelementabschnitt
- 44: Deckfläche
- 45: Rand

## Patentansprüche

1. Field Assisted Sintering Technology (FAST)-Verfahren, bei dem zur Herstellung von Kontaktelement-Halbzeugen für elektrische Schaltkontakte (3, 4), von Kontaktelementen (5) für elektrische Schaltkontakte (3, 4) und/oder von elektrischen Schaltkontakten (3, 4), insbesondere für Vakuumröhren (1), ein elektrisches oder elektromagnetisches Feld einen Sinterprozess unterstützt und/oder hervorruft,
wobei ein Kontaktmaterial (19, 34, 35) vor dem Sinterprozess derart vorliegt, dass sich die Materialzusammensetzung des Kontaktmaterials (19, 34, 35) und/oder wenigstens eine Eigenschaft des Kontaktmaterials (19, 34, 35) in wenigstens einer Körperrichtung (38, 39) des fertigen Kontaktelements (5) ändert,
**dadurch gekennzeichnet, dass**
es sich um eine definierte graduelle Änderung der Materialzusammensetzung und/oder der wenigstens einen Eigenschaft des Kontaktmaterials (19, 34, 35) handelt, wobei graduell in aufeinanderfolgenden Stufen bedeutet und eine solche stufenweise Änderung derart feinstufig ist, dass eine kontinuierliche Änderung vorliegt und pulverförmige Ausgangsmaterialien zum Einsatz kommen.

2. Verfahren nach Anspruch 1,
**dadurch gekennzeichnet, dass**
eine einteilige Kontaktträger-Kontaktelement-Kombination (30) hergestellt wird, indem ein Bereich (31) eines vorhandenen Kontaktträgers (7) mittels eines FAST-Verfahrens derart verändert wird, dass dieser Bereich (31) als Kontaktelement (5) dienen kann.

3. Verfahren nach Anspruch 2,
**dadurch gekennzeichnet, dass**
der Kontaktträger (7) eine erste Komponente des Kontaktmaterials aufweist und eine zweite Komponente (32) des Kontaktmaterials in einen oberflächennahen Bereich (31) des Kontaktträgers (7) eingebracht wird.

4. Verfahren nach Anspruch 1,
**dadurch gekennzeichnet, dass**
auf einem vorhandenen ersten Kontaktelementabschnitt (41) mittels eines FAST-Verfahrens ein zweiter Kontaktelementabschnitt (42) gebildet wird.

5. Verfahren nach Anspruch 4,
**dadurch gekennzeichnet, dass**
ein so hergestelltes Kontaktelement (5) mittels des FAST-Verfahrens zugleich mit dem Kontaktträger (7) verbunden wird.

6. Vorrichtung zur Durchführung des Verfahrens nach einem der Ansprüche 1 bis 5, mit Mitteln zum Bereitstellen des Kontaktmaterial (19, 34, 35) vor dem Sinterprozess derart, dass sich die Materialzusammensetzung des Kontaktmaterials (19, 34, 35) und/oder wenigstens eine Eigenschaft des Kontaktmaterials (19, 34, 35) in wenigstens einer Körperrichtung (38, 39) des fertigen Kontaktelements (5) ändert.

## Claims

1. Field-assisted sintering technology (FAST) method in which an electric or electromagnetic field supports and/or instigates a sintering process for producing semi-finished contact element products for electrical switching contacts (3, 4), contact elements (5) for electrical switching contacts (3, 4), and/or electrical switching contacts (3, 4), in particular for vacuum tubes (1),
wherein
a contact material (19, 34, 35) prior to the sintering process is provided in such a manner that the material composition of the contact material (19, 34, 35) and/or at least one property of the contact material (19, 34, 35) are/is modified in at least one body direction (38, 39) of the finished contact element (5)
**characterized in that**
said method is a defined gradual modification of the material composition and/or of the at least one property of the contact material (19, 34, 35), wherein gradual means in successive steps, and such a step-wise modification is in such fine steps that a continuous modification is present, and pulverulent initial materials are used.

2. Method according to Claim 1,
**characterized in that**
a unipartite contact carrier - contact element combination (30) is produced **in that** a region (31) of an available contact carrier (7) is modified by means of a FAST method in such a manner that this region (31) may serve as a contact element (5) .

3. Method according to Claim 2,
**characterized in that**
the contact carrier (7) has a first component of the contact material, and that a second component (32) of the contact material is incorporated into a surface-proximate region (31) of the contact carrier (7).

4. Method according to Claim 1,
**characterized in that**
a second contact element portion (42) is formed on an available first contact element portion (41) by means of a FAST method.

5. Method according to Claim 4,
**characterized in that**
a contact element (5) thus produced is simultaneously connected to the contact carrier (7) by means of the FAST method.

6. Device for carrying out the method according to one of Claims 1 to 5, having means for providing the contact material (19, 34, 35) prior to the sintering process in such a manner that the material composition of the contact material (19, 34, 35) and/or at least one property of the contact material (19, 34, 35) is modified in at least one body direction (38, 39) of the finished contact element (5).

## Revendications

1. Procédé Field Assisted Sintering Technology (FAST), dans lequel, pour fabriquer des semi-produits d'éléments de contacts pour des contact (3, 4) électriques de coupure, des éléments (5) de contacts pour des contacts (3, 4) électriques de coupure et/ou des contacts (3, 4) électriques de coupure, notamment de tubes (1) à vide, un champ électrique ou électromagnétique assiste et/ou provoque un processus de frittage,
dans lequel
un matériau (19, 34, 35) de contact se présente avant le processus de frittage, de manière à ce que la composition du matériau (19, 34, 35) de contact et/ou au moins une propriété du matériau (19, 34, 35) de contact se modifie dans au moins une direction (38, 39) de corps de l'élément (5) de contact fini,
**caractérisé en ce que**
c'est une modification graduelle définie de la composition du matériau et/ou de la au moins une propriété du matériau (19, 34, 35) de contact, graduelle signifiant en des paliers se succédant, et une modification par palier de ce genre est en paliers fins, de manière à avoir une modification continue, et on utilise des matériaux de départ pulvérulents.

2. Procédé suivant la revendication 1,
**caractérisé en ce que**
l'on fabrique une combinaison (30) d'une seule pièce support de contact-élément de contact, en modifiant une région (31) d'un support (7) de contact présent au moyen d'un procédé FAST, de manière à ce que cette région (31) puisse servir d'élément (5) de contact.

3. Procédé suivant la revendication 2,
**caractérisé en ce que**
le support (7) de contact a un premier constituant du matériau de contact et un deuxième constituant (32) du matériau de contact est introduit dans une région (31) proche de la surface du support (7) de contact.

4. Procédé suivant la revendication 1,
**caractérisé en ce que**
l'on forme, sur une première partie (41) d'élément de contact présente, une deuxième partie (42) d'élément de contact au moyen d'un procédé FAST.

5. Procédé suivant la revendication 4,
**caractérisé en ce que** l'on relie un élément (5) de contact ainsi fabriqué en même temps au support (7) de contact au moyen du procédé FAST.

6. Installation pour effectuer le procédé suivant l'une des revendications 1 à 5, comprenant des moyens de mise à disposition du matériau (19, 34, 35) de contact avant le processus de frittage, de manière à ce que la composition du matériau (19, 34, 35) de contact et/ou au moins une propriété du matériau (19, 34, 35) de contact se modifie dans au moins une direction (38, 39) de corps de l'élément (5) de contact fini.
